Europäisches Patentamt

European Patent Office

Office européen des brevets

(19)

(11) Veröffentlichungsnummer: **0 062 301**
**B1**

(12) **EUROPÄISCHE PATENTSCHRIFT**

(45) Veröffentlichungstag der Patentschrift:
24.06.87

(51) Int. Cl.⁴: **G 09 G 1/02**, G 06 K 15/10

(21) Anmeldenummer: **82102746.3**

(22) Anmeldetag: **31.03.82**

(54) **Zeichengenerator.**

(30) Priorität: **31.03.81 DE 3112656**

(43) Veröffentlichungstag der Anmeldung:
**13.10.82 Patentblatt 82/41**

(45) Bekanntmachung des Hinweises auf die Patenterteilung:
**24.06.87 Patentblatt 87/26**

(84) Benannte Vertragsstaaten:
**AT BE CH DE FR GB IT LI NL SE**

(56) Entgegenhaltungen:
**GB - A - 1 535 279**

**ELECTRICAL DESIGN NEWS, Band 18, Nr. 9, Mai 1973, Seiten 56-64, Denver, USA, D. MRAZEK: "Save ROMs in high-resolution dot-matrix displays and printers"**

(73) Patentinhaber: **Nixdorf Computer Aktiengesellschaft, Fürstenallee 7, D-4790 Paderborn (DE)**

(72) Erfinder: **Fick, Wolfgang, An den Steinkisten 26, D-4791 Borchen (DE)**

(74) Vertreter: **Patentanwälte Schaumburg & Thoenes, Mauerkircherstrasse 31 Postfach 86 07 48, D-8000 München 80 (DE)**

ACTORUM AG

**Beschreibung**

Die Erfindung bezieht sich auf einen Zeichengenerator zur Steuerung einer Punktrasterschrift-Ausgabeeinheit in Abhängigkeit von Zeichencodewörtern, mit einem von den Zeichencodewörtern beaufschlagten, mindestens eine Speichereinheit und einen Multiplexer umfassenden, Bereichsadressen abgebenden Adressenspeicher und einem von diesem adressierten Datenspeicher, in dem Datenwörter gespeichert sind, die jeweils einen mehrere Punkte umfassenden Bereich eines mittels der Ausgabeeinheit aus mehreren solchen Bereichen innerhalb einer vorgegebenen Punktmatrize gebildeten Zeichens angeben, wobei Mittel vorgesehen sind, die nach Abgabe einer einen ersten Bereich eines zu bildenden Zeichens angebenden Bereichsadresse aus dem Adressenspeicher schrittweise nacheinander die Bereichsadressen der übrigen Bereiche desselben Zeichens bilden.

Ein derartiger Zeichengenerator ist bekannt aus der DE-A 27 01 328. Hierbei sind im Datenspeicher die Datenwörter jeweils zusammen mit Verkettungsbits gespeichert, die angeben, ob nach dem Auslesen eines Datenwortes aus dem Datenspeicher das nächstfolgende gespeicherte Datenwort aus dem Datenspeicher auszulesen ist oder ob es sich bei dem auszulesenden Datenwort um dasjenige des letzten Bereiches eines zu bildenden Zeichens handelt, so dass nach dem Auslesen dieses Datenwortes die Adressierung des Datenspeichers mit der Bereichsadresse des ersten Bereichs des nächstfolgenden Zeichens zu erfolgen hat. Hierbei muss die Anzahl der Speicherplätze im Datenspeicher dem Produkt aus dem Zeichenvorrat an unterschiedlichen zu bildenden Zeichen und der Anzahl an Bereichen je Zeichen entsprechen, so dass auch im Hinblick auf die erforderlichen zusätzlichen Verkettungsbits eine grosse Speicherkapazität des Datenspeichers erforderlich ist.

Aus der DE-B1188 121 ist weiter ein Zeichengenerator zur Steuerung einer Punktrasterschrift-Ausgabeeinheit in Abhängigkeit von Zeichencodewörtern bekannt, der einen von Relais gebildeten, Bereichsadressen abgebenden Adressenumsetzer und einen von diesem adressierten, von einer Diodenmatrix gebildeten Datenspeicher umfasst, wobei alle Bereichsadressen von dem Adressenumsetzer gebildet werden und im Datenspeicher eine dem Bereichsvorrat unterschiedlicher Bereiche gleiche Anzahl von Datenwörtern gespeichert ist. Da in unterschiedlichen Zeichen und auch innerhalb desselben Zeichens oft untereinander gleiche Bereiche vorkommen, so dass der Bereichsvorrat an unterschiedlichen Bereichen wesentlich geringer ist als das Produkt aus Zeichenvorrat und Bereichsanzahl je Zeichen, kommt man bei dieser Lösung mit einer wesentlich geringeren Speicherkapazität des Datenspeichers gegenüber dem vorgenannten bekannten Zeichengenerator aus, während sich der erforderliche Aufwand hinsichtlich des Adressenumsetzers zwar erhöht, insgesamt aber für den Zeichengenerator ein geringerer Bauaufwand erforderlich ist.

Der Erfindung liegt die Aufgabe zugrunde, einen Zeichengenerator der eingangs genannten Art derart weiterzubilden, dass er in einfacher Weise unter Verwendung handelsüblicher Speichereinheiten und unter möglichst weitgehender Ausnutzung von deren Speicherkapazität aufgebaut werden kann.

Die Aufgabe wird gemäss der Erfindung bei einem Zeichengenerator der eingangs genannten Art dadurch gelöst, dass alle Bereichsadressen von dem Adressenspeicher gebildet werden, dass im Datenspeicher eine dem Bereichsvorrat unterschiedlicher Bereiche gleiche Anzahl von Datenwörtern gespeichert ist, dass der Adressenspeicher mehrere Speichereinheiten umfasst, deren in Paralleldarstellung abgegebene Ausgangssignale kürzer als eine Bereichsadresse sind, dass mindestens eine erste Speichereinheit des Adressenspeichers als Ausgangssignal einen ersten Bereichsadressenteil bildet, dass in einer zweiten Speichereinheit des Adressenspeichers für jede in der ersten Speichereinheit hinsichtlich des ersten Bereichsadressenteils gespeicherte Bereichsadresse der restliche, zweite Bereichsadressenteil gespeichert ist, wobei das Ausgangssignal der zweiten Speichereinheit mehrere zweite Befehlsadressenteile in Paralleldarstellung enthält, und dass der Datenspeicher mit dem jeweiligen ersten Bereichsadressenteil unmittelbar und mit dem zugehörigen zweiten Bereichsadressenteil über den Multiplexer beaufschlagt wird.

Bei dem Zeichengenerator gemäss der Erfindung werden in an sich bekannter Weise alle Bereichsadressen von dem Adressenspeicher gebildet, während im Datenspeicher eine dem Bereichsvorrat unterschiedlicher Bereiche gleiche Anzahl von Datenwörtern gespeichert ist, so dass der Datenspeicher mit einer relativ geringen Speicherkapazität gegenüber dem Fall auskommt, dass in ihm für alle Bereiche des gesamten Zeichenvorrates Datenwörter und zusätzliche Verkettungsbits gespeichert sind. Der Aufwand hinsichtlich des Adressenspeichers wird andererseits dadurch gering gehalten, dass dieser unter Verwendung von handelsüblichen Speichereinheiten aufgebaut werden kann, deren in Paralleldarstellung abgegebenes Ausgangssignal kürzer als eine Bereichsadresse ist. Eine erste Speichereinheit oder mehrere erste Speichereinheiten dieses Adressenspeichers bilden einen ersten Bereichsadressenteil. Der fehlende zweite Bereichsadressenteil jeder Bereichsadresse wird von einer zweiten Speichereinheit des Adressenspeichers geliefert, deren in Paralleldarstellung abgegebenes Ausgangssignal ebenfalls kürzer als eine Bereichsadresse, jedoch länger als ein zweiter Bereichsadressenteil ist, so dass das Ausgangssignal der zweiten Speichereinheit mehrere zweite Bereichsadressenteile in Paralleldarstellung enthält. Die Auswahl unter diesen somit gleichzeitig im Ausgangssignal der zweiten Speichereinheit erscheinenden zweiten Bereichsadressenteile erfolgt mittels des Multiplexers, während die ersten Bereichsadressenteile unmittelbar den Datenspeicher zu dessen Adressierung beaufschlagen. Der Multiplexer weist eine nur geringe Anzahl von Eingängen auf, da er lediglich der zweiten Speichereinheit und nicht der ersten Speichereinheit oder mehreren ersten Speichereinheiten nachgeschaltet ist, so dass er hinsichtlich Bauaufwand und Ansteuerungsgeschwindigkeit von einfacher Art ist.

Ausgestaltungen des Zeichengenerators gemäss der Erfindung sind in den Unteransprüchen angegeben.

Die Erfindung wird im folgenden anhand der Zeichnungen näher erläutert, in denen ein Ausführungsbeispiel dargestellt ist. Es zeigt:

Fig. 1 eine Punktmatrize mit einem darin gebildeten Schriftzeichen «A»;

Fig. 2A eine Tabelle der zur spaltenweisen Darstellung des Zeichens «A» in Fig. 1 erforderlichen Datenwörter;

Fig. 2B eine Tabelle der Adressen der Datenwörter gemäss Fig. 2A;

Fig. 3 das Schaltungsdiagramm eines Zeichengenerators gemäss der Erfindung und einer von diesem gesteuerten Punktrasterschrift-Ausgabeeinheit und

Fig. 4A bis 4C Adresstabellen zur Erläuterung des Speicherinhalts der Speichereinheiten des Adressenspeichers des Zeichengenerators gemäss Fig. 3.

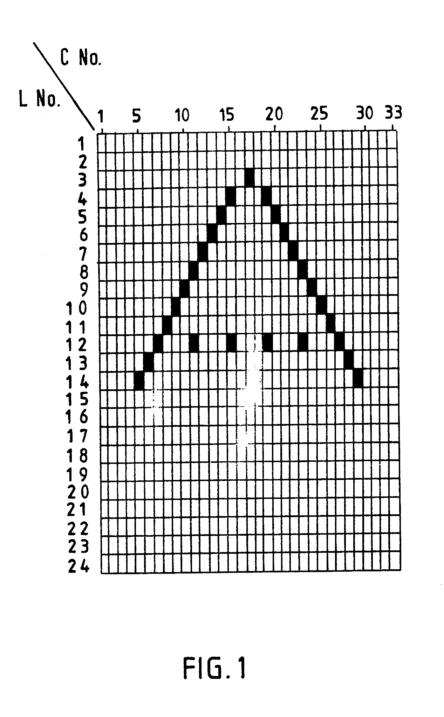

Bei dem folgenden Beispiel wird davon ausgegangen, dass eine Punktrasterschrift-Ausgabeeinheit alphanumerische oder sonstige Zeichen innerhalb einer Punktmatrize spaltenweise bildet, wobei die Punktmatrize aus 24 Zeilen L und 40 Spalten C bestehen; in Fig. 1 sind die Zeilen L Nr. 1 bis 24 und die Spalten C Nr. 1 bis 33 dargestellt, während die Spalten C Nr. 34 bis 40 einfachheitshalber weggelassen sind. Bei dieser relativ hohen Anzahl von Zeilen und Spalten können Schriftzeichen auch mit Unterlängen und seitlich aneinander anschliessend dargestellt werden und Rundungen und Schrägen von Zeichen können mit für das Auge nicht mehr wahrnehmbarer Verzerrung wiedergegeben werden. Die schwarzen Flächen in Fig. 1 stellen die Zentren von Punkten dar, die von der verwendeten Ausgabeeinheit erzeugt werden und die einen Durchmesser von annähernd drei Zeilenbreiten und sechs Spaltenbreiten besitzen, wie dies bei als Ausgabeeinheit verwendeten Tintentröpfchen-Druckern oder Nadeldruckern üblich ist. Der Querbalken im Buchstaben «A» wird damit ein lückenloser Strich, und das Zeichen ist oben geschlossen.

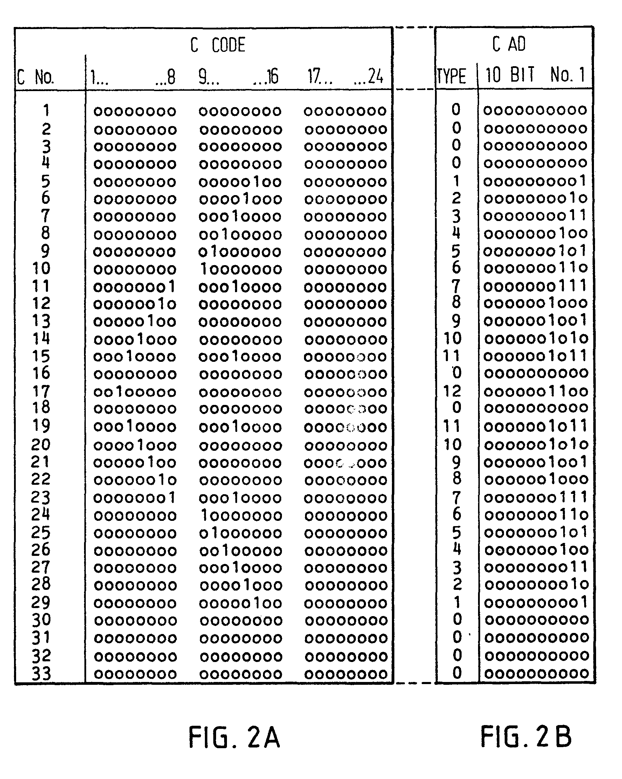

In der Tabelle der Fig. 2A ist für jede der Spalten C Nr. 1 bis 33 ein als C-Code bezeichnetes Datenwort angegeben, wie es für die Ansteuerung eines spaltenweise parallel arbeitenden Schreibwerkes oder einer ähnlichen Ausgabeeinheit benötigt wird. Ein aus 40 Spalten gebildetes Zeichen würde bei Speicherung aller seiner Spalten in der Form der Tabelle der Fig. 2A ein Speicherfeld von 24 mal 40 Bit und ggf. zusätzlich Speicherkapazität für Verkettungsbits benötigen. Tatsächlich treten aber in dem Zeichen «A», wie aus Fig. 2B hervorgeht, nur insgesamt 13 Typen von in unterschiedlicher Weise aus Punkten zusammengesetzten Spalten C auf. Ähnliches gilt für andere darzustellende Zeichen, wobei noch hinzukommt, dass die Zeichen eines darzustellenden Zeichenvorrats jedenfalls teilweise hinsichtlich der darin auftretenden Typen von Spalten übereinstimmen. Man kann also die im Datenspeicher eines Zeichengenerators gespeicherten Datenwörter oder C-Codes beispielsweise mittels Bereichsadressen oder im vorliegenden Fall, wo die Bereiche Spalten sind, mittels Spaltenadressen adressieren, die nach dem Beispiel der zweiten, mit «C AD» überschriebenen Spalte der Fig. 2B zehn Bits aufweisen. Solche Spaltenadressen C AD sind beim Ausführungsbeispiel verwendet.

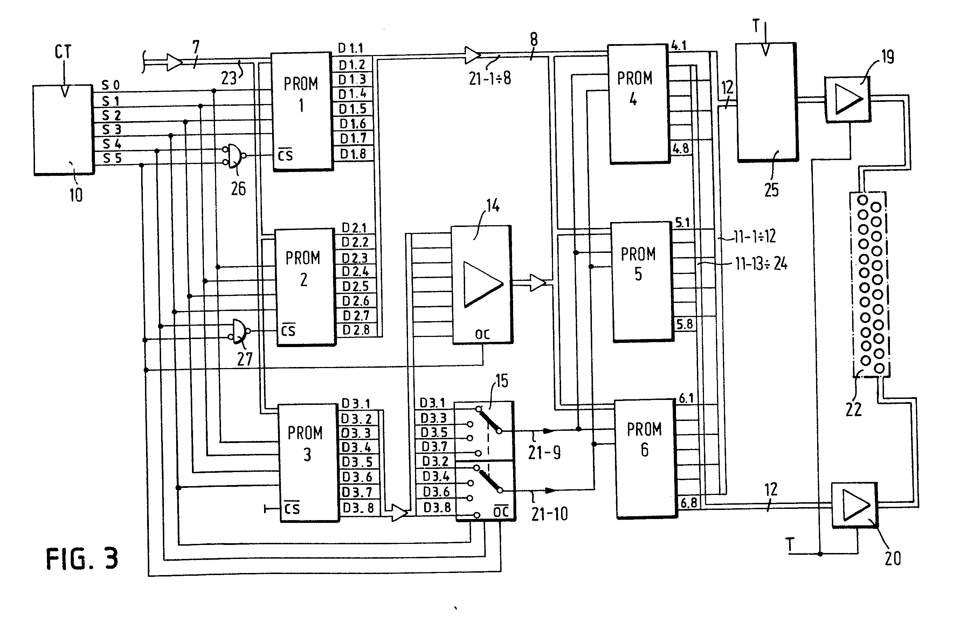

Für einen Zeichenvorrat von insgesamt 128 unterschiedlichen Zeichen, der mit Zeichencodewörtern von jeweils 7 Bit dargestellt werden kann, wurde ermittelt, dass bei einer Auflösung der Zeichen auf eine Zeichenmatrize von 24 Zeilen L und 40 Spalten C ein Spaltenvorrat von bis zu 1024 unterschiedlichen Spalten entsprechend den in der ersten Spalte der Fig. 2B numerierten Typen erforderlich sein kann. Sämtliche Typen können daher wie beim Ausführungsbeispiel mit der 10 Bit langen Adresse C AD aufgerufen werden. Mit diesen Spaltenadressen wird beim Ausführungsbeispiel ein Datenspeicher adressiert, der aus drei handelsüblichen 1k-8-Bit-Speichereinheiten (PROM 4 bis 6 in Fig. 3) gebildet ist, die 1000 verschiedene 24-Bit-Datenwörter (C Code in Fig. 2A) speichern. Insgesamt wird somit eine Speicherkapazität von 24k-Bits für die Datenwörter und 128 mal 40 mal 10 Bits für die Spaltenadresstabelle eines Adressenspeichers benötigt.

Der entsprechend vorstehenden Erläuterungen arbeitende Zeichengenerator ist in Fig. 3 dargestellt. Zeichencodewörter, die aus 7 Bits bestehen, werden von einer nicht dargestellten Quelle, beispielsweise einer Datenverarbeitungsvorrichtung, in Paralleldarstellung über ein sieben Leitungen umfassendes Kabel 23 einem Adressenspeicher zugeführt, der drei Speichereinheiten PROM 1, PROM 2, PROM 3, umfasst. Bei diesen handelt es sich um handelsübliche programmierbare Lesespeichereinheiten, während hiervon abweichend im Rahmen der Erfindung auch reine Lesespeichereinheiten (ROMs) verwendet werden könnten. Ihre Speicherkapazität beträgt jeweils 2048 mal 8 Bit, so dass ihre in Paralleldarstellung abgegebenen Ausgangssignale von 8 Bit kürzer als eine Spaltenadresse C AD sind, die gemäss Fig. 2B 10 Bits umfasst. Vier Adresseneingänge jeder Speichereinheit PROM 1, PROM 2, PROM 3 werden von einem nach modulo-40 arbeitenden Spaltenzähler 10 angesteuert, der beim Ausführungsbeispiel synchron mit der Bewegung eines Schreibkopfes mittels dabei erzeugter Taktimpulse CT die jeweilige Spaltenstellung zählt; bei anderen Ausführungsformen könnten in üblicher Weise zur schrittweisen Abgabe von Spalten adressen oder sonstigen Bereichsadressen entsprechende Spaltenadressen auch dadurch gebildet werden, dass die Abgabe eines Datenwortes (C Code in Fig. 2A) an eine Ausgabeeinheit oder die Darstellung einer vorhergehenden Spalte mittels dieser Ausgabeeinheit erfolgt ist. Der Spaltenzähler 10 weist parallele Ausgänge S0 bis S5 auf. Durch Entschlüsselung der Signale der Ausgänge S4, S5 mittels als Decoder vorgesehener Gatter 26, 27 werden Signale $\overline{CS}$ gewonnen, die die Freigabeeingänge der Speichereinheiten PROM 1, PROM 2, beaufschlagen und deren Ausgänge D 1.1 bis D 1.8 bzw. D 2.1 bis D 2.8 freigeben. Diese sind paarweise parallel zueinander an acht Leitungen 21–1 bis 21–8 in der Weise angeschlossen, dass beispielsweise an die Leitung 21–1 die Ausgänge D 1.1 und D 2.1 angeschlossen sind.

In der Speichereinheit PROM 1 ist für jedes Zeichen A–1, A, A + 1, . . . für jede Spalte C No. 1 bis No. 16 ein aus 8 Bits bestehender erster Spaltenadressenteil gespeichert. In entsprechender Weise ist in der Speichereinheit PROM 2 für jedes Zeichen A–1, A, A + 1, . . . für die Spalten C No. 17 bis No. 32 einschliesslich ein erster Spaltenadressenteil gespeichert. In der Speichereinheit PROM 3, deren Freigabeeingang ständig mit einem Freigabesignal $\overline{CS}$ beaufschlagt ist, ist für jede in den Speichereinheiten PROM 1, PROM 2 hinsichtlich des ersten Spaltenadressenteils gespeicherte Spaltenadresse der restliche zweite Spaltenadressenteil gespeichert, der aus den Bits No. 9 und No. 10 besteht. Da die Speichereinheit PROM 3 ebenso wie die Speichereinheiten PROM 1 und PROM 2 je Speicherplatz 8 Bits aufweist, enthält das Ausgangssignal der Speichereinheit PROM 3 vier zweite Spaltenadressenteile in Paralleldarstellung. Die Auswahl des jeweils zur Vervollständigung einer Spaltenadresse C AD (Fig. 2B) erforderlichen zweiten Spaltenadressenteils aus dem Ausgangssignal der Speichereinheit PROM 3 wird durch den Multiplexer 15 vorgenommen, der an die Ausgänge D3.1 bis D3.8 mit seinen Eingängen angeschlossen ist und der hierzu von den Ausgängen S3, S4 des Spaltenzählers 10 angesteuert wird. Der Multiplexer 15 weist zwei dem Bit No. 9 bzw. No. 10 der Spaltenadressen entsprechende Ausgänge auf.

Die Leitungen 21–1 bis 21–8 und die an die Ausgänge des Multiplexers 15 angeschlossenen Leitungen 21–9, 21–10 sind zu den Adresseingängen eines Datenspeichers geführt, der beim Ausführungsbeispiel von Speichereinheiten PROM 4, PROM 5, PROM 6 gebildet ist, die jeweils eine Speicherkapazität von 1k mal 8 Bit aufweisen. An den Ausgängen 4.1 bis 4.8, 5.1 bis 5.8, 6.1 bis 6.8 der Speichereinheiten PROM 4, PROM 5, PROM 6 erscheinen je nach deren Adressierung Datenwörter (C Code in Fig. 2A), die in noch zu beschreibender Weise einen als Nadeldrucker ausgebildeten Schreibkopf 22 steuern.

Ist beispielsweise während des Druckens des Zeichens «A» (Fig. 1) dessen Spalte C No. 9 zu drucken, so ist das an den Schreibkopf 22 abzugebende Datenwort gemäss Fig. 2A der C Code 00000000 01000000 00000000.

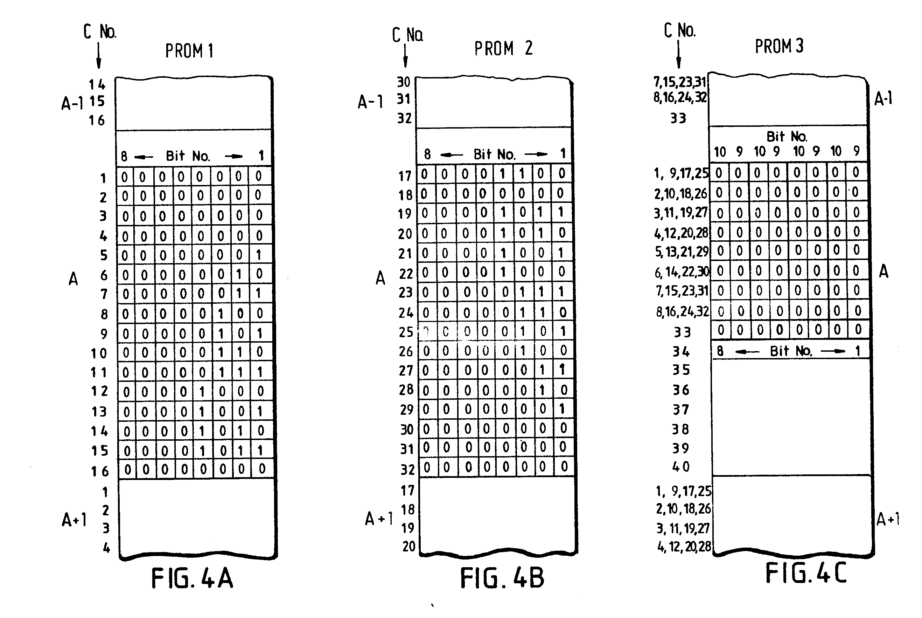

Hierzu ist der von den Speichereinheiten PROM 4, PROM 5, PROM 6 gebildete Datenspeicher gemäss Fig. 2B zu adressieren mit der Spaltenadresse C AD 0000000101 (Type 5), wobei in dieser Schreibweise das erste Bit das Bit No. 10 und das letzte Bit das Bit No. 1 ist. Der die Bits No. 1 bis No. 8 umfassende erste Spaltenadressenteil der Spaltenadresse C AD (Fig. 2B) ist gemäss Fig. 4A in der Speichereinheit PROM 1 im Speicherbereich für das Zeichen «A» unter C No. 9 gespeichert. Dieser erste Spaltenadressenteil wird bei seiner Abgabe den Speichereinheiten PROM 4, PROM 5, PROM 6 unmittelbar zugeführt.

Der zweite Spaltenadressenteil der Spalte C No. 9 ist gemäss Fig. 4C in der Speichereinheit PROM 3 in einem dem Zeichen «A» zugeordneten Speicherbereich an einem Speicherplatz gespeichert, der zusätzlich zu diesem zweiten Adressenteil auch die jeweils die Bits No. 9 und No. 10 umfassenden zweiten Spaltenadressenteile der Spalten C No. 1, 17 und 25 umfasst. Die Auswahl des im Beispiel interessierenden zweiten Spaltenadressenteils für die Spalte C No. 9 erfolgt mittels des Multiplexers 15 (Fig. 3), wonach der ausgewählte zweite Spaltenadressenteil den Speichereinheiten PROM 4, PROM 5, PROM 6 über die Leitungen 21–9, 21–10 zugeführt wird. In entsprechender Weise wird beim Drucken einer der Spalten C No. 17 bis 32 einschliesslich des Zeichens «A» der gemäss Fig. 4B in der Speichereinheit PROM 2 gespeicherte erste Adressenteil unmittelbar dem Datenspeicher und der in der Speichereinheit PROM 3 gespeicherte zweite Spaltenadressenteil über den Multiplexer 15 dem Datenspeicher zugeführt.

Zweckmässig ist die Länge der Spaltenadressen einerseits und die Anzahl der Bits (im Ausführungsbeispiel 8 Bits) je Speicherplatz der untereinander gleichen Speichereinheiten PROM 1, PROM 2, PROM 3 andererseits so gewählt, dass die Anzahl der Bits je Speicherplatz ein ganzzahliges Vielfaches der in dem zweiten Spaltenadressenteil enthaltenen Bits (im Ausführungsbeispiel zwei Bits) ist, um jeden mit zweiten Spaltenadressenteilen belegten Speicherplatz der Speichereinheit PROM 3 in einfacher Weise vollständig ausnutzen zu können. Wären beispielsweise die beiden Bits des zweiten Spaltenadressenteils einiger Spaltenadressen in aufeinanderfolgenden Speicherplätzen gespeichert, so müsste der Multiplexer 15 diese Bits nacheinander auslesen, und es müssten Puffermittel vorgesehen sein, um alle Bits einer so gebildeten Spaltenadresse gleichzeitig dem Datenspeicher anbieten zu können, wodurch der Aufwand erhöht würde.

Da die Speichereinheit PROM 3 von hinsichtlich der Speicherkapazität gleicher Ausführung wie die Speichereinheiten PROM 1 und PROM 2 ist, übersteigt ihre Speicherkapazität in vielen Fällen und auch beim Ausführungsbeispiel diejenige Binärzahl, bei der gerade eine vollständige Ausnutzung des Speicherraumes des Adressenspeichers möglich ist. Diese überschüssige Speicherkapazität der Speichereinheit PROM 3 wird dadurch ausgenutzt, dass in ihr gegenüber den Spaltenadressen kürzere erste Spaltenadressenteile von zusätzlichen Spaltenadressen gespeichert sind, mit denen der Datenspeicher unter Umgehung des Multiplexers 15 über einen Schaltverstärker 14 beaufschlagt wird, und dass der Multiplexer 15 bei Beaufschlagung des Datenspeichers mit einem solchen ersten Spaltenadressenteil einer zusätzlichen Spaltenadresse als zugehörigen zweiten Spaltenadressenteil zwei Bits mit einem für alle diese zweiten Bereichsadressenteile gleichbleibenden Binärwert – im Ausführungsbeispiel Null – abgibt. Beim Ausführungsbeispiel ist diese Art der nur teilweisen Speicherung für die Spaltenadressen der Spalten C No. 33 bis 40 einschliesslich vorgesehen, die somit gemäss Fig. 4C jeweils aus einem ersten Spaltenadressenteil mit den Bits No. 1 bis 8 sowie aus zwei angehängten Bits mit dem Wert Null bestehen. Es hat sich gezeigt, dass es ausreicht, bei diesen Spalten C No. 33 bis 40 nur eine geringere Anzahl von Datenwörtern des Datenspeichers zu adressieren, so dass die nur hinsichtlich des ersten Spaltenadressenteils variable Spaltenadresse für geeignete Zeichen ausreicht. Dies auch deshalb, weil die Zuordnung der Datenwörter zu deren Spaltenadresse beliebig gewählt werden kann.

Wenn die Ausgangssignalkombination des Spaltenzählers 10 einer auszugebenden Spalte C No. 33 bis 40 entspricht, sind die Speichereinheiten PROM 1 und PROM 2 über die vorgeschalteten Gatter 26, 27 gesperrt. Gleichzeitig ist der Multiplexer 15 durch ein vom Ausgang S5 des Spaltenzählers 10 kommendes und seinem invertierenden Eingang $\overline{OC}$ zugeführtes Signal gesperrt, so dass seine Ausgänge mit einem Null-Signal beaufschlagt sind. Dagegen sind dabei die Ausgänge D3.1 bis D3.8 der Speichereinheit PROM 3 nun über den Schaltverstärker 14 mit den Leitungen 21–1 bis 21–8 verbunden, da der Schaltverstärker 14 mittels eines seinem Eingang OC vom Spaltenzähler 10 zugeführten Signals durchgeschaltet ist.

Die Ausgangssignale der Speichereinheiten PROM 4, PROM 5, PROM 6 werden in zwei Gruppen auf je 12 Leitungen 11–1 bis 11–12 bzw. 11–13 bis 11–24 den 24 Schreibelementen des Schreibkopfes 22 über Verstärker 19, 20 unter Steuerung durch einen Synchrontakt T, der vom Schreibkopftransport abgeleitet ist, zugeführt. Die Schreibelemente sind dabei in üblicher Weise in zwei in Zeilenrichtung versetzten Spalten alternierend angeordnet. Entsprechend dem Spaltenversatz der Schreibelemente werden die zwölf Punkte der ungeradzahligen Zeilen L (Fig. 1) der zurückliegenden Spalte C über ein zwölfstelliges Schieberegister 25 einer dem Versatz entsprechenden Länge, mit dem Synchrontakt T gesteuert, verzögert dem Verstärker 19 zugeführt.

Die Speichereinheiten PROM 4, PROM 5, PROM 6 des Datenspeichers sind zweckmässig wie beim Ausführungsbeispiel von gleicher Art und gleicher Speicherkapazität wie die Speichereinheiten PROM 1, PROM 2, PROM 3 des Adressenspeichers, also handelsübliche programmierbare Lesespeichereinheiten oder ggf. reine Lesespeichereinheiten.

Abwandlungen gegenüber dem beschriebenen Ausführungsbeispiel sind im Rahmen der Erfindung selbstverständlich möglich. So können andere Punktmatrizenformate mit gegenüber dem Ausführungsbeispiel unterschiedlichen Spalten- und Zeilenanzahlen gewählt werden. Auch können hinsichtlich Speicherplatzlänge und Speicherkapazität unterschiedliche handelsübliche Speichereinheiten sowohl für den Adressenspeicher wie auch für den Datenspeicher zur Verwendung kommen. Die vom Datenspeicher ausgegebenen Datenwörter können nicht nur zur Steuerung von ein- oder zweispaltig versetzt druckenden Schreibköpfen, sondern auch zur Steuerung sonstiger Punktrasterschrift-Ausgabeeinheiten wie beispielsweise Sichtgeräten dienen. Während beim Ausführungsbeispiel von einer spaltenweisen Bildung der Zeichen innerhalb einer Punktmatrize ausgegangen ist, können auch im Datenspeicher gespeicherte Datenwörter andere Bereiche einer Punktmatrize bezeichnen, beispielsweise Zeilen.

**Patentansprüche**

1. Zeichengenerator zur Steuerung einer Punktrasterschrift-Ausgabeeinheit (22) in Abhängigkeit von Zeichencodewörtern, mit einem von den Zeichencodewörtern beaufschlagten, mindestens eine Speichereinheit (PROM 1, PROM 2, PROM 3) und einen Multiplexer (15) umfassenden, Bereichsadressen (C AD) abgebenden Adressenspeicher (PROM 1, PROM 2, PROM 3, 14, 15) und einem von diesem adressierten Datenspeicher (PROM 4, PROM 5, PROM 6), in dem Datenwörter (C Code) gespeichert sind, die jeweils einen mehrere Punkte umfassenden Bereich (C) eines mittels der Ausgabeeinheit (22) aus mehreren solchen Bereichen (C) innerhalb einer vorgegebenen Punktmatrize gebildeten Zeichens (A) angeben, wobei Mittel (10) vorgesehen sind, die nach Abgabe einer einen ersten Bereich (C) eines zu bildenden Zeichens (A) angebenden Bereichsadresse (C AD) aus dem Adressenspeicher (PROM 1, PROM 2, PROM 14, 15) schrittweise nacheinander die Bereichsadressen (C AD) der übrigen Bereiche (C) desselben Zeichens (A) bilden, dadurch gekennzeichnet, dass alle Bereichsadressen (C AD) von dem Adressenspeicher (PROM 1, PROM 2, PROM 3, 14, 15) gebildet werden, dass im Datenspeicher (PROM 4, PROM 5, PROM 6) eine dem Bereichsvorrat unterschiedlicher Bereiche (C) gleiche Anzahl von Datenwörtern (C Code) gespeichert ist, dass der Adressenspeicher (PROM 1, PROM 2, PROM 3, 14, 15) mehrere Speichereinheiten (PROM 1, PROM 2, PROM 3) umfasst, deren in Paralleldarstellung abgegebene Ausgangssignale kürzer als eine Bereichsadresse (C AD) sind, dass mindestens eine erste Speichereinheit (PROM 1, PROM 2) des Adressenspeichers (PROM 1, PROM 2, PROM 3, 14, 15) als Ausgangssignal einen ersten Bereichsadressenteil bildet, dass in einer zweiten Speichereinheit (PROM 3) des Adressenspeichers (PROM 1, PROM 2, PROM 3, 14, 15) für jede in der ersten Speichereinheit (PROM 1, PROM 2) hinsichtlich des ersten Bereichsadressenteils gespeicherte Bereichsadresse (C AD) der restliche zweite Bereichsadressenteil gespeichert ist, wobei das Ausgangssignal der zweiten Speichereinheit (PROM 3) mehrere zweite Bereichsadressenteile in Paralleldarstellung enthält, und dass der Datenspeicher (PROM 4, PROM 5, PROM 6) mit dem jeweiligen ersten Bereichsadressenteil (über Leitungen 21–1 bis 21–8) unmittelbar und mit dem zugehörigen zweiten Befehlsadressenteil über den Multiplexer (15) beaufschlagt wird.

2. Zeichengenerator nach Anspruch 1, dadurch gekennzeichnet, dass in der zweiten Speichereinheit (PROM 3) gegenüber den Bereichsadressen (C AD) kürzere erste Bereichsadressenteile von zusätzlichen Bereichsadressen (C AD) gespeichert sind, mit denen der Datenspeicher (PROM 4, PROM 5, PROM 6) unter Umgehung des Multiplexers (15) beaufschlagt wird, und dass der Multiplexer (15) bei Beaufschlagung des Datenspeichers (PROM 4, PROM 5, PROM 6) mit einem solchen ersten Bereichsadressenteil einer zusätzlichen Bereichsadresse (C AD) als zugehörigen zweiten Bereichsadressenteil mindestens ein Bit mit einem vorgegebenen Binärwert abgibt.

3. Zeichengenerator nach Anspruch 1 oder 2, dadurch gekennzeichnet, dass zur schrittweisen Abgabe der Bereichsadressen (C AD) ein Bereichszähler (10) vorgesehen ist, dessen in Paralleldarstellung abgegebene Ausgangssignale Adresseneingänge der Speichereinheiten (PROM 1, PROM 2, PROM 3) und des Multiplexers (15) und ggf. über Decoder (26, 27) Freigabeeingänge ($\overline{CS}$, $\overline{OC}$) der Speichereinheiten (PROM 1, PROM 2, PROM 3) und des Multiplexers (15) beaufschlagen.

4. Zeichengenerator nach einem der vorangehenden Ansprüche, dadurch gekennzeichnet, dass die erste Speichereinheit oder ggf. vorgesehene mehrere erste Speichereinheiten (PROM 1, PROM 2) und die zweite Speichereinheit (PROM 3) untereinander gleich ausgebildet sind.

5. Zeichengenerator nach einem der vorangehenden Ansprüche, dadurch gekennzeichnet, dass der Datenspeicher von mehreren untereinander gleichen und vorzugsweise den Speichereinheiten (PROM 1, PROM 2, PROM 3) des Adressenspeichers (PROM 1, PROM 2, PROM 3, 14, 15) gleichenden Speichereinheiten (PROM 4, PROM 5, PROM 6) gebildet ist.

**Claims**

1. A character generator for controlling a dot matrix output unit (22) in dependence upon character code words, comprising an address memory (PROM 1, PROM 2, PROM 3, 14, 15) to which the character code words are fed, which comprises at least one memory unit (PROM 1, PROM 2, PROM 3) and a multiplexer (15), and which delivers area addresses (C AD); and a data memory (PROM 4, PROM 5, PROM 6) which is addressed by the address memory and in which data words (C Code) are stored each indicating an area (C), comprising a plurality of dots, of a character (A) formed by the output unit (22) from a plurality of such areas (C) within a predetermined dot matrix, means (10) being provided which, after delivery of an area address (C AD) indicating a first area (C) of a required character (A) from the address memory (PROM 1, PROM 2, PROM 14, 15) successively and stepwise form the area addresses (C AD) of the other areas (C) of the same character (A), characterized in that all the area addresses (C AD) are formed by the address memory (PROM 1, PROM 2, PROM 3, 14, 15); a number of data words (C Code) equal to the stock of different areas (C) is stored in the data memory (PROM 4, PROM 5, PROM 6); the address memory PROM 1, PROM 2, PROM 3, 14, 15 comprises a plurality of memory units (PROM 1, PROM 2, PROM 3), whose output signals delivered in parallel representation are shorter than an area address (C AD); at least one first memory unit (PROM 1, PROM 2) of the address memory (PROM 1, PROM 2, PROM 3, 14, 15) forms a first area address part as the output signal; the remaining second area address part is stored in a second memory unit (PROM 3) of the address memory (PROM 1, PROM 2, PROM 3, 14, 15) for each area address (C AD) stored in the first memory unit (PROM 1, PROM 2) in respect of the first area address part, the output signal of the second memory unit (PROM 3) comprising a plurality of second area address parts in parallel representation; and the respective first area address part is fed to the data memory (PROM 4, PROM 5, PROM 6) directly (via lines 21–1 to 21–8) and the associated second area address part is fed thereto via the multiplexer (15).

2. A character generator according to Claim 1, characterized in that first area address parts of additional area addresses (C AD), which parts are shorter than the area addresses (C AD), are stored in the second memory unit (PROM 3) and are fed to the data memory (PROM 4, PROM 5, PROM 6) to bypass the multiplexer (15); and when such a first area address part of an additional area address (C AD) is fed to the data memory (PROM 4, PROM 5, PROM 6), the multiplexer (15) delivers as associated second area address part at least one bit having a predetermined binary value.

3. A character generator according to Claim 1 or 2, characterized in that an area counter (10) is provided for the stepwise delivery of the area addresses (C AD) and its output signals delivered in parallel representation are fed to address inputs of the memory units (PROM 1, PROM 2, PROM 3) and of the multiplexer (15) and, where applicable, via decoders (26, 27) to release inputs ($\overline{CS}$, $\overline{OC}$) of the memory units (PROM 1, PROM 2, PROM 3) and of the multiplexer (15).

4. A character generator according to any one of the preceding claims, characterized in that the first memory unit or, where applicable, a plurality of first memory units (PROM 1, PROM 2) and the second memory unit (PROM 3) are of the same kind.

5. A character generator according to any one of the preceding claims, characterized in that the data memory comprises a plurality of memory units (PROM 4, PROM 5, PROM 6), which are of the same kind and which are preferably like the memory units (PROM 1, PROM 2, PROM 3) of the address memory (PROM 1, PROM 2, PROM 3, 14, 15).

## Revendications

1. Générateur de caractères pour la commande d'une unité de sortie à présentation par points de trame (22) en relation avec des mots-codes de caractères, avec une mémoire d'adresses (PROM 1, PROM 2, PROM 3, 14, 15) délivrant des adresses de zone (C AD), alimentée en mots-codes de caractère, comprenant au moins une unité de mémoire (PROM 1, PROM 2, PROM 3) et un multiplexeur (15), et avec une mémoire de données (PROM 4, PROM 5, PROM 6) adressée par cette mémoire d'adresses, dans laquelle sont mises en mémoire des données élémentaires (Code C) qui indiquent chacune une zone (C), comprenant plusieurs points d'un caractère (A) formé par l'unité de sortie (22) à partir de plusieurs zones (C) de ce genre à l'intérieur d'une matrice de points prédéterminée, des moyens (10) étant prévus qui, après qu'a été extraite de la mémoire d'adresses (PROM 1, PROM 2, PROM 3, 14, 15) une adresse de zone (C AD) indiquant une première zone (C) d'un caractère (A) à former, forment successivement pas à pas les adresses de zone (C AD) des autres zones (C) du même caractère (A), caractérisé en ce que toutes les adresses de zone (C AD) sont formées par la mémoire d'adresses (PROM 1, PROM 2, PROM 3, 14, 15), que, dans la mémoire de données (PROM 4, PROM 5, PROM 6), est mis en mémoire un nombre de données élémentaires (Code C) égal au nombre de zones (C) différentes disponibles, que la mémoire d'adresses (PROM 1, PROM 2, PROM 3, 14, 15) comprend plusieurs unités de mémoire (PROM 1, PROM 2, PROM 3) dont les signaux de sortie délivrés en mode parallèle sont plus courts qu'une adresse de zone (C AD), qu'au moins une première unité de mémoire (PROM 1, PROM 2) de la mémoire d'adresses (PROM 1, PROM 2, PROM 3, 14, 15) forme comme signal de sortie une première partie d'adresse, que, dans une deuxième unité de mémoire (PROM 3) de la mémoire d'adresses (PROM 1, PROM 2, PROM 3, 14, 15), est mise en mémoire la deuxième partie restante d'adresse de zone pour chaque adresse de zone (C AD) dont la première partie d'adresse de zone est mise en mémoire dans la première unité de mémoire (PROM 1, PROM 2), le signal de sortie de la deuxième unité de mémoire (PROM 3) contenant plusieurs deuxièmes parties d'adresses de zone en mode parallèle, et que la mémoire de données (PROM 4, PROM 5, PROM 6) reçoit directement la première partie d'adresse de zone (par les lignes 21–1 à 21–8) et par l'intermédiaire du multiplexeur (15) la deuxième partie d'adresse de zone correspondante.

2. Générateur de caractères selon la revendication 1 caractérisé en ce que, dans la deuxième unité de mémoire (PROM 3), sont mémorisées des premières parties d'adresses de zone d'adresses de zone supplémentaires, plus courtes que les adresses de zone (C AD) avec lesquelles est alimentée la mémoire de données (PROM 4, PROM 5, PROM 6) en évitant le multiplexeur (15), et que, lorsque la mémoire de données (PROM 4, PROM 5, PROM 6) est alimentée avec une telle première partie d'adresse de zone d'une adresse de zone (C AD) supplémentaire, le multiplexeur (15) délivre comme deuxième partie d'adresse de zone correspondante au moins un bit avec une valeur binaire prédéterminée.

3. Générateur de caractères selon la revendication 1 ou 2 caractérisé en ce que, pour délivrer pas à pas les adresses de zone (C AD), il est prévu un compteur de zones (10) dont les signaux de sortie fournis en mode parallèle sont appliqués à des entrées d'adresse des unités de mémoire (PROM 1, PROM 2, PROM 3) et du multiplexeur (15) et, éventuellement, par l'intermédiaire de décodeurs (26, 27) à des entrées de validation ($\overline{CS}$, $\overline{OC}$) des unités de mémoire (PROM 1, PROM 2, PROM 3) et du multiplexeur (15).

4. Générateur de caractères selon l'une quelconque des revendications précédentes, caractérisé en ce que la première unité de mémoire ou éventuellement plusieurs premières unités de mémoire prévues (PROM 1, PROM 2) et la deuxième unité de mémoire (PROM 3) sont similaires entre elles.

5. Générateur de caractères selon l'une quelconque des revendications précédentes, caractérisé en ce que la mémoire de données est constituée par plusieurs unités de mémoire (PROM 4, PROM 5, PROM 6) similaires entre elles et de préférence du même genre que les unités de mémoire (PROM 1, PROM 2, PROM 3) de la mémoire d'adresses (PROM 1, PROM 2, PROM 3, 14, 15).

FIG. 1

| C No. | C CODE 1... ...8 | C CODE 9... ...16 | C CODE 17... ...24 | TYPE | C AD 10 BIT No. 1 |
|---|---|---|---|---|---|
| 1 | 00000000 | 00000000 | 00000000 | 0 | 0000000000 |
| 2 | 00000000 | 00000000 | 00000000 | 0 | 0000000000 |
| 3 | 00000000 | 00000000 | 00000000 | 0 | 0000000000 |
| 4 | 00000000 | 00000000 | 00000000 | 0 | 0000000000 |
| 5 | 00000000 | 00000100 | 00000000 | 1 | 0000000001 |
| 6 | 00000000 | 00001000 | 00000000 | 2 | 0000000010 |
| 7 | 00000000 | 00010000 | 00000000 | 3 | 0000000011 |
| 8 | 00000000 | 00100000 | 00000000 | 4 | 0000000100 |
| 9 | 00000000 | 01000000 | 00000000 | 5 | 0000000101 |
| 10 | 00000000 | 10000000 | 00000000 | 6 | 0000000110 |
| 11 | 00000001 | 00010000 | 00000000 | 7 | 0000000111 |
| 12 | 00000010 | 00000000 | 00000000 | 8 | 0000001000 |
| 13 | 00000100 | 00000000 | 00000000 | 9 | 0000001001 |
| 14 | 00001000 | 00000000 | 00000000 | 10 | 0000001010 |
| 15 | 00010000 | 00010000 | 00000000 | 11 | 0000001011 |
| 16 | 00000000 | 00000000 | 00000000 | 0 | 0000000000 |
| 17 | 00100000 | 00000000 | 00000000 | 12 | 0000001100 |
| 18 | 00000000 | 00000000 | 00000000 | 0 | 0000000000 |
| 19 | 00010000 | 00010000 | 00000000 | 11 | 0000001011 |
| 20 | 00001000 | 00000000 | 00000000 | 10 | 0000001010 |
| 21 | 00000100 | 00000000 | 00000000 | 9 | 0000001001 |
| 22 | 00000010 | 00000000 | 00000000 | 8 | 0000001000 |
| 23 | 00000001 | 00010000 | 00000000 | 7 | 0000000111 |
| 24 | 00000000 | 10000000 | 00000000 | 6 | 0000000110 |
| 25 | 00000000 | 01000000 | 00000000 | 5 | 0000000101 |
| 26 | 00000000 | 00100000 | 00000000 | 4 | 0000000100 |
| 27 | 00000000 | 00010000 | 00000000 | 3 | 0000000011 |
| 28 | 00000000 | 00001000 | 00000000 | 2 | 0000000010 |
| 29 | 00000000 | 00000100 | 00000000 | 1 | 0000000001 |
| 30 | 00000000 | 00000000 | 00000000 | 0 | 0000000000 |
| 31 | 00000000 | 00000000 | 00000000 | 0 | 0000000000 |
| 32 | 00000000 | 00000000 | 00000000 | 0 | 0000000000 |
| 33 | 00000000 | 00000000 | 00000000 | 0 | 0000000000 |

FIG. 2A          FIG. 2B

FIG. 3

C No.

**PROM 1**

| C No. | | | 8 ← Bit No. → 1 | | | | | | |
|---|---|---|---|---|---|---|---|---|---|
| 14 | | | | | | | | | |
| A-1 15 | | | | | | | | | |
| 16 | | | | | | | | | |
| | | | 8 | | | | | | 1 |
| 1 | 0 | 0 | 0 | 0 | 0 | 0 | 0 | 0 |
| 2 | 0 | 0 | 0 | 0 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 0 | 0 | 0 | 1 |
| A  6 | 0 | 0 | 0 | 0 | 0 | 0 | 1 | 0 |
| 7 | 0 | 0 | 0 | 0 | 0 | 0 | 1 | 1 |
| 8 | 0 | 0 | 0 | 0 | 0 | 1 | 0 | 0 |
| 9 | 0 | 0 | 0 | 0 | 0 | 1 | 0 | 1 |
| 10 | 0 | 0 | 0 | 0 | 0 | 1 | 1 | 0 |
| 11 | 0 | 0 | 0 | 0 | 0 | 1 | 1 | 1 |
| 12 | 0 | 0 | 0 | 0 | 1 | 0 | 0 | 0 |
| 13 | 0 | 0 | 0 | 0 | 1 | 0 | 0 | 1 |
| 14 | 0 | 0 | 0 | 0 | 1 | 0 | 1 | 0 |
| 15 | 0 | 0 | 0 | 0 | 1 | 0 | 1 | 1 |
| 16 | 0 | 0 | 0 | 0 | 0 | 0 | 0 | 0 |
| 1 | | | | | | | | |
| A+1  2 | | | | | | | | |
| 3 | | | | | | | | |
| 4 | | | | | | | | |

**FIG. 4A**

C No.

**PROM 2**

| C No. | | | 8 ← Bit No. → 1 | | | | | | |
|---|---|---|---|---|---|---|---|---|---|
| 30 | | | | | | | | | |
| A-1 31 | | | | | | | | | |
| 32 | | | | | | | | | |
| | | | 8 | | | | | | 1 |
| 17 | 0 | 0 | 0 | 0 | 1 | 1 | 0 | 0 |
| 18 | 0 | 0 | 0 | 0 | 0 | 0 | 0 | 0 |
| 19 | 0 | 0 | 0 | 0 | 1 | 0 | 1 | 1 |
| 20 | 0 | 0 | 0 | 0 | 1 | 0 | 1 | 0 |
| 21 | 0 | 0 | 0 | 0 | 1 | 0 | 0 | 1 |
| A  22 | 0 | 0 | 0 | 0 | 1 | 0 | 0 | 0 |
| 23 | 0 | 0 | 0 | 0 | 0 | 1 | 1 | 1 |
| 24 | 0 | 0 | 0 | 0 | 0 | 1 | 1 | 0 |
| 25 | 0 | 0 | 0 | 0 | 1 | 0 | 1 |
| 26 | 0 | 0 | 0 | 0 | 0 | 1 | 0 | 0 |
| 27 | 0 | 0 | 0 | 0 | 0 | 0 | 1 | 1 |
| 28 | 0 | 0 | 0 | 0 | 0 | 0 | 1 | 0 |
| 29 | 0 | 0 | 0 | 0 | 0 | 0 | 0 | 1 |
| 30 | 0 | 0 | 0 | 0 | 0 | 0 | 0 | 0 |
| 31 | 0 | 0 | 0 | 0 | 0 | 0 | 0 | 0 |
| 32 | 0 | 0 | 0 | 0 | 0 | 0 | 0 | 0 |
| 17 | | | | | | | | |
| 18 | | | | | | | | |
| A+1 19 | | | | | | | | |
| 20 | | | | | | | | |

**FIG. 4B**

C No.

**PROM 3**

| C No. | 10 | 9 | 10 | 9 | 10 | 9 | 10 | 9 |
|---|---|---|---|---|---|---|---|---|
| 7,15,23,31 | | | | Bit No. | | | | |
| 8,16,24,32 | | | | | | | | |
| 33 | | | | | | | | |
| 1, 9,17,25 | 0 | 0 | 0 | 0 | 0 | 0 | 0 | 0 |
| 2,10,18,26 | 0 | 0 | 0 | 0 | 0 | 0 | 0 | 0 |
| 3,11,19,27 | 0 | 0 | 0 | 0 | 0 | 0 | 0 | 0 |
| 4,12,20,28 | 0 | 0 | 0 | 0 | 0 | 0 | 0 | 0 |
| 5,13,21,29 | 0 | 0 | 0 | 0 | 0 | 0 | 0 | 0 |
| 6,14,22,30 | 0 | 0 | 0 | 0 | 0 | 0 | 0 | 0 |
| 7,15,23,31 | 0 | 0 | 0 | 0 | 0 | 0 | 0 | 0 |
| 8,16,24,32 | 0 | 0 | 0 | 0 | 0 | 0 | 0 | 0 |
| 33 | 0 | 0 | 0 | 0 | 0 | 0 | 0 | 0 |

8 ← Bit No. → 1

| C No. |
|---|
| 34 |
| 35 |
| 36 |
| 37 |
| 38 |
| 39 |
| 40 |
| 1, 9,17,25 |
| 2,10,18,26 |
| 3, 11,19,27 |
| 4,12,20,28 |

**FIG. 4C**

0 062 301